(19)

Europäisches
Patentamt
European
Patent Office
Office européen
des brevets

(11) **EP 4 492 123 A1**

(12) **EUROPEAN PATENT APPLICATION**
published in accordance with Art. 153(4) EPC

(43) Date of publication:
**15.01.2025  Bulletin 2025/03**

(21) Application number: **23767208.4**

(22) Date of filing: **10.03.2023**

(51) International Patent Classification (IPC):
**G02B 26/06** *(2006.01)*    **G02B 5/20** *(2006.01)*
**G02B 5/28** *(2006.01)*    **G02B 5/30** *(2006.01)*

(52) Cooperative Patent Classification (CPC):
**G02B 5/20; G02B 5/28; G02B 5/30; G02B 26/06**

(86) International application number:
**PCT/KR2023/003320**

(87) International publication number:
**WO 2023/172107 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **11.03.2022   KR 20220030607**

(71) Applicants:
• **Yonsei University, University-Industry
Foundation(UIF).
Seoul 03722 (KR)**

• **Koh Young Technology Inc.
Seoul 08588 (KR)**

(72) Inventors:
• **JOO, Chul Min
Goyang-si Gyeonggi-do 10361 (KR)**
• **SEONG, Baek Cheon
Seoul 03725 (KR)**

(74) Representative: **Meissner Bolte Partnerschaft
mbB
Patentanwälte Rechtsanwälte
Postfach 86 06 24
81633 München (DE)**

(54) **SYSTEM AND METHOD FOR DEPTH-OF-FIELD EXPANSION**

(57)    The present disclosure is related to a system and method for expanding the depth of field (DOF) of an optical system. According to an embodiment of the present disclosure, the system for extending a depth of field of an optical system includes: a binary phase mask disposed between first and second lenses of the optical system; and a controller configured to control a binary phase structure formed in the phase shift mask.

FIG. 2

EP 4 492 123 A1

**Description**

TECHNICAL FIELD

The present disclosure relates to a system and a method for depth-of-field extension and, more specifically, to a system and a method for extending the depth of field (DOF) of an optical system by using a binary phase structure.

BACKGROUND

An optical system is utilized in various industries, including the medical field, for diagnosis of the shape and condition of an object to be imaged. In this case, the optical system must meet the requirements of optical signal quality to provide an optical signal having sufficient resolution and accuracy for use.

In particular, defocus in an optical system is a factor that may degrade optical signal quality, so technology for extending (increasing) the depth of field (DOF) is needed to solve the defocus problem. In particular, in a non-interference optical system, there is a trade-off relationship between the depth and resolving power. That is, extending (increasing) the depth results in a decrease in resolving power.

Thus, there is a need for improved solutions that can extend the depth of field while partially overcoming the trade-off relationship between the depth of field and the resolving power.

However, the foregoing merely provides background information on the present disclosure and does not constitute disclosed technology.

SUMMARY

In order to solve the problems of the prior art as described above, the purpose of the present disclosure is to provide a system and method for expanding the depth of field (DOF) of an optical system by using a binary phase structure.

However, the problems to be solved by the present disclosure are not limited to the problems mentioned above, and other problems not mentioned can be clearly understood by a person having ordinary knowledge in the technical field to which the present invention belongs from the description below.

According to an embodiment of the present disclosure, a system for extending a depth of field of an optical system, which is provided to solve the above problems, includes: a binary phase mask disposed between first and second lenses of the optical system; and a controller configured to control a binary phase structure formed in the phase shift mask.

The controller is configured to evaluate the binary phase structure of the phase shift mask by using light output from the second lens according to the binary phase structure, and then to use the binary phase structure as is or change the binary phase structure, based on the evaluation result.

The phase shift mask comprises first and second regions configured to perform different phase shift actions on light.

The first region is configured to delay incident light by a first phase, and the second region is configured to delay incident light by a second phase.

The first region is configured to delay incident light by a phase of 0°, and the second region is configured to delay incident light by a phase of 180°.

The first and second regions are provided in plural and are formed alternately.

The second region is placed in the center.

The binary phase mask is implemented as a spatial light modulator or a grating light valve.

The controller is configured to change the binary phase structure to an optimal binary phase structure by using particle swarm optimization.

According to an embodiment of the present disclosure, a method for extending a depth of field of an optical system includes: disposing a binary phase mask between first and second lenses of the optical system; and applying an optimal binary phase structure while controlling a binary phase structure formed on the phase shift mask.

The applying of the optimal binary phase structure comprises evaluating the binary phase structure of the phase shift mask by using light output from the second lens according to the binary phase structure, and then using the binary phase structure as is or changing the binary phase structure, based on the evaluation result.

The applying of the optimal binary phase structure comprises applying the optimal binary phase structure by using particle swarm optimization.

The present disclosure, configured as described above, is advantageous in that the depth of field (DOF) of an optical system may be extended using a binary phase structure.

Furthermore, the present disclosure is also advantageous in that an optimal binary phase structure may be generated based on particle swarm optimization (PSO), thereby significantly reducing parameters used for the design of a binary phase mask and optimizing performance.

The effects to be obtained from the present disclosure are not limited to the above-described effects, and other effects that have not been described will be clearly understood by those skilled in the art, to which the present disclosure belongs, from the following description.

BRIEF DESCRIPTION OF DRAWINGS

FIG. 1 illustrates a schematic block diagram of a system 100 according to an embodiment of the present disclosure.

FIG. 2 illustrates an example of the application of the system 100 according to an embodiment of the present disclosure to an optical system 101.

FIG. 3 illustrates various examples of a binary phase structure in the plane of a phase shift mask 110.

FIG. 4 illustrates a schematic block diagram of an electronic device 120.

FIG. 5 illustrates examples of whether the phase shift mask 110 is applied when a point light source is incident on an optical system.

FIG. 6 illustrates examples of whether the phase shift mask 110 is applied when light from subjects at various distances is incident on an optical system.

FIG. 7 illustrates a flowchart of a control method according to an embodiment of the present disclosure.

FIGS. 8 and 9 illustrate conceptual diagrams of a control method according to an embodiment of the present disclosure.

FIG. 10 illustrates an overview of image acquisition using the optical system 101.

FIG. 11 illustrates changes in image quality and point spread functions located at different depths with respect to the optical axis direction (u) of a typical optical system.

FIG. 12 illustrates various continuous phase patterns and the result of binarization of each pattern.

FIG. 13 illustrates the result of binarization of a continuous phase pattern formed by a quadratic expression in which a first-order term and a second-order term are combined.

FIG. 14 illustrates multiple binary phase structures obtained by generating continuous functions through the adjustment of the coefficients of first-order and second-order terms and binarizing the generated function, and focal results thereof. FIG. 15 illustrates multiple binary phase structures generated using second-order and fourth-order terms.

DETAILED DESCRIPTION

The purposes, means, and resulting effects of the present disclosure will become apparent from the following detailed description related to the accompanying drawings. Accordingly, those skilled in the art to which the present disclosure belongs will be able to easily implement the technical idea of the present disclosure. Furthermore, in describing the present disclosure, when it is deemed that a detailed description of known technology related to the present disclosure may unnecessarily obscure the subject matter of the present disclosure, such detailed description will be omitted.

The terms used in the present specification are for describing embodiments and are not intended to limit the present disclosure. In the present specification, singular forms include plural forms as well, unless the context clearly indicates otherwise. In the present specification, the terms "include", "comprise", "arrange", "have", etc., do not exclude the presence or addition of one or more other components besides the mentioned components.

In the present specification, terms such as "or", "at least one", and the like may refer to one of words listed together or a combination of two or more thereof. For example, "A or B", "at least one of A and B" may include only one of A or B, or may include both A and B.

In the present specification, descriptions following phrases such as "for example" should not be construed as limiting the implementation of the disclosure according to various embodiments of the present disclosure due to the fact that presented information, such as the characteristics, variables, or values cited, may not be exactly the same, and due to effects such as variations, including allowable errors, measurement errors, limitations in measurement accuracy, and other commonly known factors.

In the present specification, when a certain component is described as being "connected" or "coupled" to another component, it should be understood that the certain component may be directly connected or coupled to the other component, but there may be other components therebetween. On the other hand, when a certain component is described as being "directly connected" or "directly coupled" to another component, it should be understood that there are no other components therebetween.

In the present specification, when a certain component is described as being "on" or "in contact with" another component, it should be understood that the certain component may be directly touching or connected to the other component, but there may be another component therebetween. On the other hand, when a certain component is described as being "directly on" or "in direct contact with" another component, it can be understood that there is no other component therebetween. Other expressions that describe relationships between components, such as "between" and "directly between", can also be interpreted similarly.

In the present specification, the terms "first", "second", and the like may be used to describe various components, but the components should not be limited by such terms. Further, such terms should not be construed to limit the order of the components, but may be used to distinguish one component from another component. For example, a "first component" may be referred to as a "second component", and similarly, a "second component" may be referred to as a "first component".

Unless otherwise defined, all terms used in the present specification may be used in a sense commonly understood by those skilled in the art to which the present disclosure belongs. Furthermore, terms defined in commonly used dictionaries should not be interpreted ideally or excessively unless explicitly defined otherwise.

Hereinafter, a preferred embodiment according to the present disclosure will be described in detail with reference to the accompanying drawings.

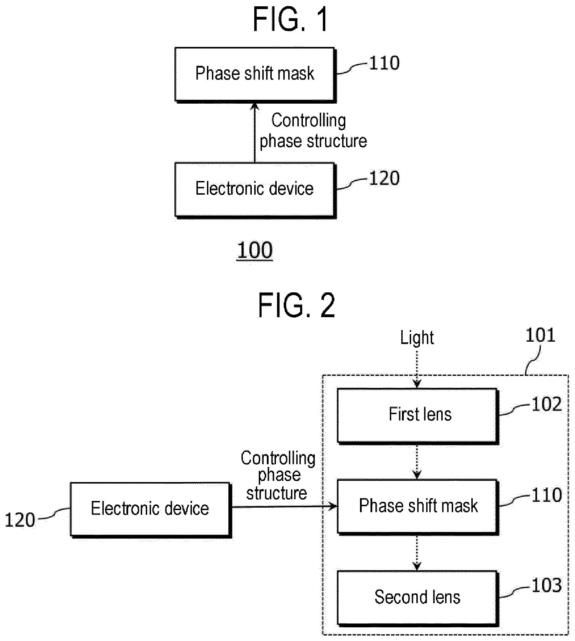

FIG. 1 illustrates a schematic block diagram of a system 100 according to an embodiment of the present disclosure. FIG. 2 illustrates an example of the application of the system 100 according to an embodiment of the present disclosure to an optical system 101.

The system 100 is, according to an embodiment of the present disclosure, a system for extending the depth of field (DOF) of an optical system 101. The optical system 101 includes multiple lenses to perform various optical actions on incident light (e.g., collecting and refracting light to generate an optical image of an object). For example, the optical system 101 may be, but is not limited to, an image capturing device, etc.

The optical system 101 includes a first lens 102 disposed close to an input unit through which light from a light source is incident, and a second lens 103 disposed close to an output unit through which light is ultimately emitted based on an optical action. For example, light from a light source may be incident on a front-end region of the first lens 102, and light may be emitted from a rear end region of the second lens 103 disposed at a rear end of the first lens 102 so that a focus of the light emitted from the rear end region is formed.

As shown in FIGS. 1 and 2, the system 100 includes a phase shift mask 110 and an electronic device 120.

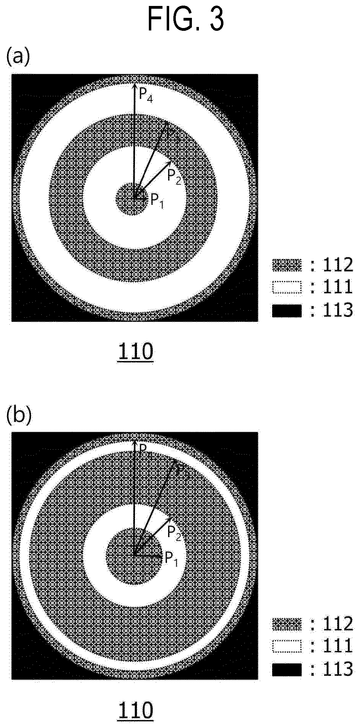

FIG. 3 illustrates various examples of a binary phase structure in the plane of the phase shift mask 110. Here, the plane refers to a surface formed by the axes (the x-axis and the y-axis) perpendicular to the optical axis (the z-axis).

The phase shift mask 110 is a mask for shifting incident light by using a binary phase method, may also be referred to as a binary phase mask (BPM), and may be disposed between the first and second lenses 102 and 103 of the optical system 101. That is, referring to FIG. 2, the phase shift mask 110 includes a binary phase structure in a region in the plane thereof through which light passes. Here, the binary phase structure includes first and second regions 111 and 112 that perform different phase shift actions on the light. Accordingly, light passing between the first and second lenses 102 and 103 is delayed by different phases in the first and second regions 111 and 112 and then emitted.

In other words, in the light-passing region in the plane of the phase shift mask 110, at least one first region 111 may delay incident light by a first phase (e.g., a phase of 0°), and at least one other second region 112 (e.g., the remaining region) may delay incident light by a second phase (e.g., a phase of 180°). In this case, the first and second regions 111 and 112 may be alternately formed one by one.

For example, referring to FIG. 3, the light-passing region in the plane of the phase shift mask 110 is a circular region, a circular second region 112 is disposed in the center of the light passing region, and a circular band-shaped first region 111 may be disposed around the second region 112 at the center. A circular band-shaped second region 112 may be additionally disposed around the first region 111, and a circular band-shaped first region 112 may be additionally disposed around the circular band-shaped second region 112, so that the first and second regions 111 and 112 may be alternately disposed. Furthermore, a third region 113 for blocking light may be disposed in the outermost region in the plane of the phase shift mask 110. The first and second regions 111 and 112 may also be formed in a pattern opposite to that described above (i.e., a pattern in which the first region 111 is located at the center). The shape, number, and area of the first and second regions 111 and 112 may be variously designed, and particularly, may be designed under the control of the electronic device 120, which will be described later.

The phase shift mask 110 may preferably be a device that is dynamically adjustable in the shape, number, and area for the first region 111 and the second region 112. For example, the phase shift mask 110 may be implemented as a spatial light modulator (SLM), a grating light valve (GLV), or the like. That is, the SLM forms the spaces of the first and second regions 111 and 112 according to the input of an electrical or optical signal to change the phase of incident light in each of the first and second regions 111 and 112 and output the same. The SLM may be a Micro-Electro-Mechanical System (MEMS)-based SLM or a Liquid Crystal (LC)-based SLM. Furthermore, the GLV forms the first and second regions 111 and 112 through a dynamically adjustable diffraction grating to change the phase of incident light in each of the first and second regions 111 and 112 and output the same.

When the phase shift mask 110 is a dynamically adjustable device such as an SLM or a GLV, the phase shift mask 110 is connected to a phase structure controller (not shown) that implements a binary phase structure of the phase shift mask 110. The phase structure controller may include a memory storing information for implementing the binary phase structure of the phase shift mask 110, and a processor configured to process the implementation of the binary phase structure by using the information stored in the memory.

However, the present disclosure is not limited thereto, and the phase shift mask 110 may have the above-described first and second regions 111 and 112 implemented through physical steps by a technique such as imprinting, thin film deposition, wet/dry etching, or holographic film.

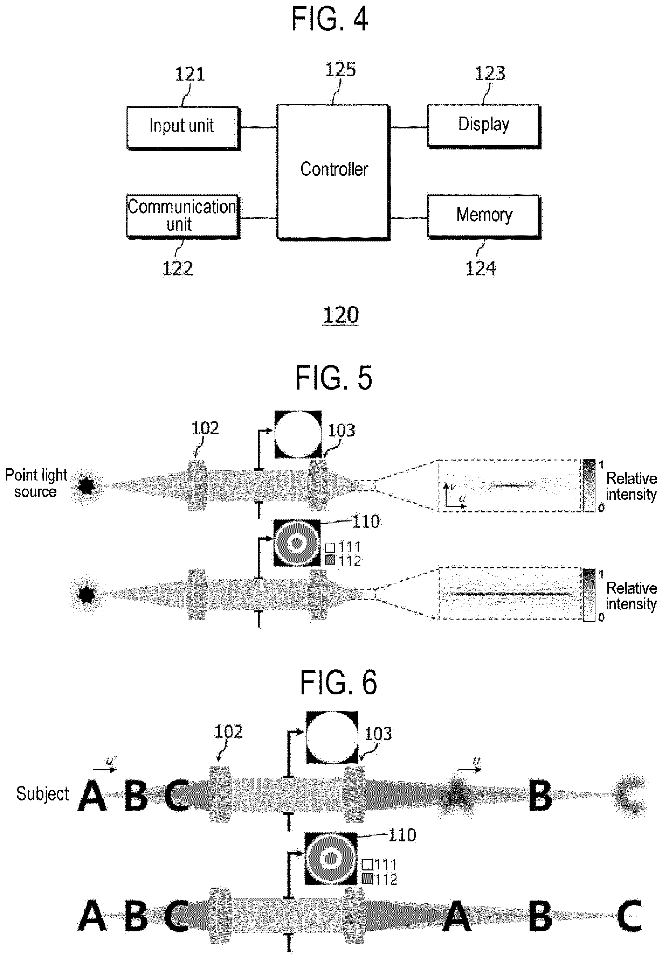

FIG. 4 illustrates a schematic block diagram of the electronic device 120.

The electronic device 120, which is a computing-capable electronic device, may perform at least first and second functions. The first function is to generate control signals for the binary phase structure of the phase shift mask 110 (i.e., the design of the shape, number, and area of the first region 111 and the second region 112). Furthermore, the second function is to evaluate a current binary phase structure of the phase shift mask 110 by using final light output by applying the current binary phase structure to the optical system 101. The first function is performed during initialization, and then the first function may be repeated so that a modified binary phase structure of the phase shift mask 110 is applied based on the evaluation result of the second function.

For example, the electronic device may be a general-purpose computing device, such as a desktop personal computer (desktop PC), a laptop personal computer (laptop PC), a tablet personal computer (tablet PC), a netbook computer, a workstation, a smartphone, a smart pad, or a mobile phone, or a dedicated embedded system implemented based on Embedded Linux, etc., but is not limited thereto.

Referring to FIG. 4, the electronic device 120 may include an input unit 121, a communication unit 122, a display 123, a memory 124, and a controller 125.

The input unit 121 may generate input data in response to various user inputs, and may include various input means. For example, the input unit 121 may include, but is not limited to, a keyboard, a key pad, a dome switch, a touch panel, a touch key, a touch pad, a mouse, a menu button, etc.

The communication unit 122 is configured to perform communication with other devices such as the phase shift mask 110 or the phase structure controller. For example, the communication unit 122 may transmit control information of the binary phase structure of the phase shift mask 110, which is generated based on the first function, to the phase shift mask 110 or the phase structure controller. Furthermore, the communication unit 122 may receive information necessary for performing the first and second functions from other terminals or servers, etc. For example, the communication unit 122 may perform wireless communication such as fifth generation (5G) communication, long-term evolution-advanced (LTE-A), long-term evolution (LTE), Bluetooth, Bluetooth low energy (BLE), near-field communication (NFC), Wi-Fi communication, or wired communication such as cable communication, but is not limited thereto.

The display 123 displays various image data on a screen, and may include a non-emissive panel or an emissive panel. For example, the display may display a screen of the process and result of performing the first and second functions. For example, the display may include, but is not limited to, a liquid crystal display (LCD), a light-emitting diode (LED) display, an organic LED (OLED) display, a micro electro mechanical system (MEMS) display, or an electronic paper display. Furthermore, the display may be combined with the input unit 121 and implemented as a touch screen, etc.

The memory 124 stores various types of information necessary for operation of the electronic device 120. That is, the memory 124 may store control program information and the like necessary for performing the first and second functions. For example, the memory 124 may include, depending on the type thereof, a hard disk type, a magnetic media type, a compact disc read only memory (CD-ROM), an optical media type, a magneto-optical media type, a multimedia card micro type, a flash memory type, a read only memory type, or a random-access memory type, but is not limited thereto. In addition, the memory 124 may be, depending on the use/location thereof, a cache, a buffer, a main memory, an auxiliary memory, or a separately provided storage system, but is not limited thereto.

The controller 125 may perform various control operations of the electronic device 120. That is, the controller 125 may control the performance of the first and second functions, may control the performance of control programs stored in the memory 124 and control methods described later, and may control the operation of the remaining elements of the electronic device 120, i.e., the input unit 121, the communication unit 122, the memory 124, the display, etc. For example, the controller 125 may include at least one processor which is hardware, and may include a process which is software executed by the processor. However, the present disclosure is not limited thereto.

In performing the first function, the controller 125 may control the design of the binary phase structure of the phase shift mask 110. That is, during initialization, the controller 125 may derive the binary phase structure (initial binary phase structure) of the phase shift mask 110 randomly or according to a pre-configuration. Subsequently, the phase structure controller may derive a modified binary phase structure of the phase shift mask 110 based on a particle swarm optimization (PSO) technique, which will be described later, according to on the evaluation results of performing the second function on the previous binary phase structure.

If necessary, the controller 125 may transmit a control signal related to the derived binary phase structure to the phase shift mask 110 or the phase structure controller disposed in the optical system 101. In this case, the phase shift mask 110 or the phase structure controller may implement the first region 111 and the second region 112 by reflecting the binary phase structure according to the received control signal.

In performing the second function, the controller 125 controls a measurement unit 131 to derive a focal shape and image form specific to the distance, predicted based on the current binary phase structure of the phase shift mask 110. Then, the controller 125 derives a depth-specific image quality (e.g., structural similarity, peak signal-to-noise ratio, mean squared error, etc.) based on the predicted result to control an evaluation of whether a given image quality condition is satisfied in a targeted depth interval.

If, as a result of the evaluation based on performing this second function, the image quality condition is not satisfied, the controller 125 may perform the first function again based on the PSO to derive a modified binary phase structure of the phase shift mask 110.

FIG. 5 illustrates examples of whether the phase shift mask 110 is applied when a point light source is incident on an optical system, and FIG. 6 illustrates examples of whether the phase shift mask 110 is applied when light from subjects at various distances is incident on an optical system.

Referring to FIG. 5, it can be seen that when the phase shift mask 110 is applied to the optical system 101, it is possible to control the pattern of focus formation for a point light source. That is, by applying the phase shift mask 110 to the optical system 101, it is possible to change the performance of a focus as shown in the lower diagram of FIG. 4, and in particular, it is possible to lengthen the depth of focus while keeping the size of the focus small. That is, it is possible to extend the depth of field by applying the phase shift mask 110 to the optical system 101.

Furthermore, referring to FIG. 6, it can be seen that when the phase shift mask 110 is applied to the optical system 101, it is possible to control the depth of field. That is, by applying the phase shift mask 110 to the optical system 101, it is possible to change the resolving power according to the subject distance as shown in the lower diagram of FIG. 5, and in particular, it is possible to image all objects at different distances with good resolution. That is, it is possible to extend the depth of field by applying the phase shift mask 110 to the optical system 101.

Hereinafter, a control method according to the present disclosure will be described in more detail.

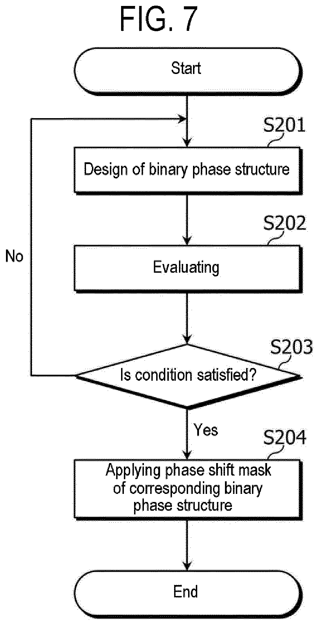

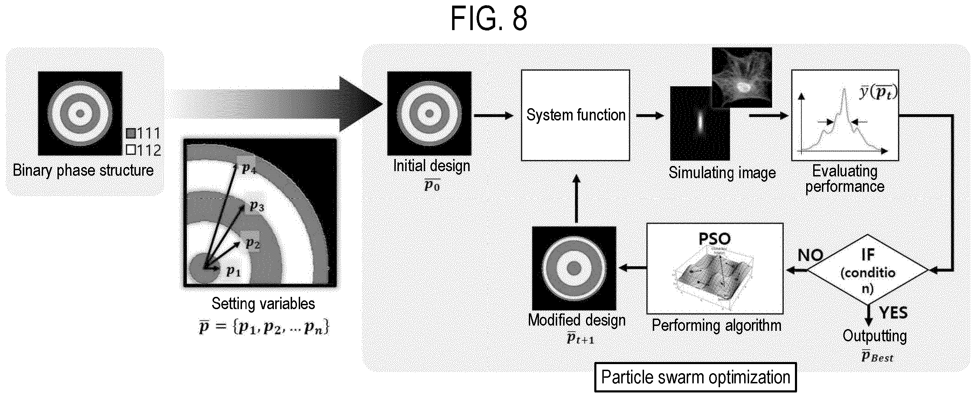

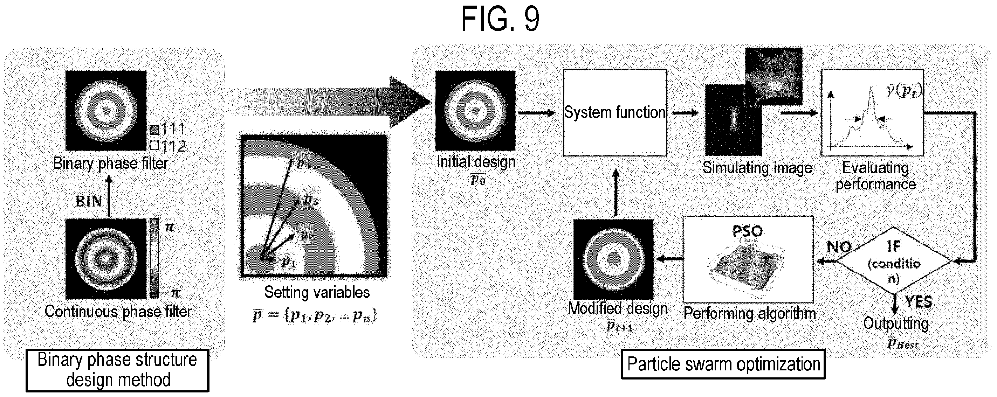

FIG. 7 illustrates a flowchart of a control method according to an embodiment of the present disclosure. FIGS. 8 and 9 illustrate conceptual diagrams of a control method according to an embodiment of the present disclosure.

A control method according to an embodiment of the present disclosure (hereinafter, referred to as "the present control method") is performed by the above-described system 100, i.e., the controller 125 of the electronic device 120. The present control method is a method for designing a binary phase structure having an optimal extended depth of field for the phase shift mask 110.

The present control method may include a first step of disposing the binary phase shift mask 110 between the first and second lenses 102 and 103 of the optical system, and a second step of applying an optimal binary phase structure while controlling the binary phase structure formed in the phase shift mask 110. For example, as shown in FIG. 7, the present control method may include S201 to S204, which correspond to the detailed process of the second step.

In S201, the controller 125 performs a first function to derive a design of a binary phase structure of the phase shift mask 110. In this case, during initialization, the design of an initial binary phase structure is derived either randomly or from preconfigured data.

For example, referring to FIGS. 3, 8, and 9, the phase shift mask 110 is configured as a binary phase structure with n alternating first regions 111 and second regions 112 (wherein n is a natural number greater than or equal to 2), and may be set and used as a matrix $\overline{p_0} = \{p_1, p_2, \dots, p_n\}$ having, as elements, the distances ($\{p_1, p_2, \dots, p_n\}$) from the center point to the boundaries of the first regions 111 and the second regions 112. That is, the controller 125 may design the phase shift mask 110 by parameterizing and processing the binary phase structure of the phase shift mask 110.

Then, in S202, the controller 125 performs a second function to evaluate the design of the binary phase structure derived in S201. In this case, the controller 125 may use light output from the second lens 103 according to the derived binary phase structure of the phase shift mask 110 to perform an evaluation of the binary phase structure. That is, the controller 125 controls the measurement part 131 to derive distance-specific focus shapes and image forms predicted according to the current binary phase structure of the phase shift mask 110, and evaluates depth-specific image quality based on the predicted result.

Then, in S203, the controller 125 identifies whether the derived image quality result meets a specific image quality condition within a targeted depth interval. When the condition is satisfied, the controller 125 transmits a control signal related to the design of the current binary phase structure to the phase shift mask 110 or the phase structure controller (S204). Accordingly, the phase shift mask 110 or the phase structure controller may implement the first regions 111 and the second regions 112 by reflecting the design of the corresponding binary phase structure according to the received control signal.

If, in S203, the condition is unsatisfied, S201 is performed again. In this case, the controller 125 executes the first function based on particle swarm optimization (PSO) to derive a design of a modified binary phase structure (i.e., an optimal previous phase structure) of the phase shift mask 110. To this end, S202 to S203 may be repeatedly performed, so that the design of the modified binary phase structure may be evaluated and whether the condition is satisfied may be identified.

The process described above is repeated until the design of the binary phase structure satisfies the condition. For example, an initial binary phase structure may be set to $\bar{p}_o$, and a binary phase structure at the t-th iteration may be set to $\bar{p}_t$. That is, when, as a result of evaluation of $\bar{p}_t$ at the t-th iteration, the condition is not satisfied, a modified binary phase structure of $\bar{p}_{t+1}$ may be derived according to the PSO, and the evaluation of the derived $\bar{p}_{t+1}$, may be performed again.

The following is a description of the theories and principles applicable to a control method according to an embodiment of the present disclosure.

< Method and Optical System for Predicting Distance-specific Focal Shape and Image Form>

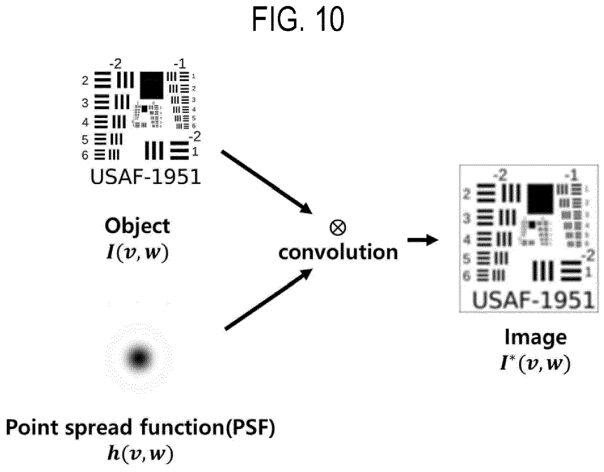

FIG. 10 illustrates an overview of image acquisition using the optical system 101.

Referring to FIG. 10, in general, the function of an optical device is to acquire a portion of light emitted or scattered from an object to form an image of the object. However, real-world optical systems cannot acquire all of the light rays emitted from an object, and thus suffer from diffraction of light and aberrations due to refraction and distortion of light by lenses. The transfer function of such an optical system is known as a point spread function (PSF). The imaging method of an optical system using such a point spread function can be expressed as the following equation (1), wherein the convolution of the object and the point spread function represents an image.

$$I_i^*(v, w) = I(v, w) \otimes h_i(v, w) \quad (1)$$

Resolving power or resolution power (angular resolution, spatial resolution) is an indicator of the image-forming ability of an imaging device, refers to the ability to distinguish between two objects that are separated from each other, and can be expressed by the shape of a point spread function.

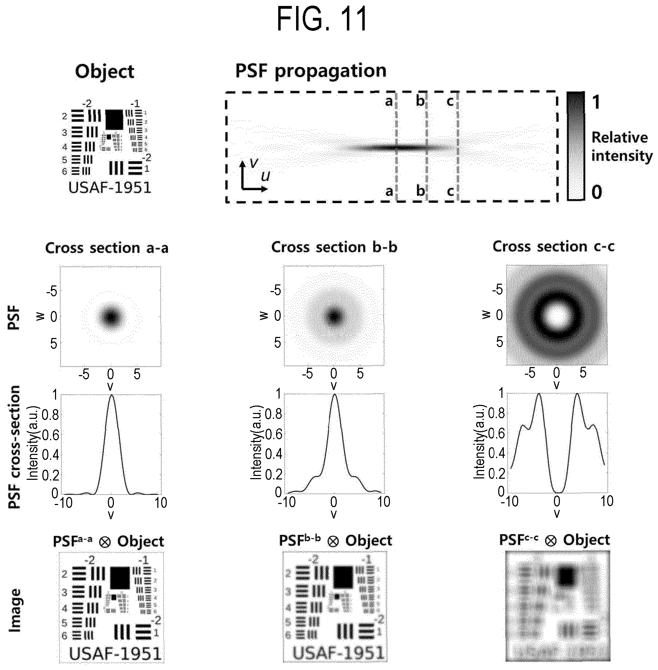

FIG. 11 illustrates changes in image quality and point spread functions located at different depths with respect to the optical axis direction (u) of a typical optical system.

Referring to FIG. 11, as light propagates from position a-a to position c-c, there is a change in a point spread function due to diffraction of the light, and a corresponding distortion of an image is inevitable. The depth of focus is defined as an interval in which focus is maintained in the optical axis direction, and the depth of field is defined as an interval of field in which an acceptable level of resolution power can be maintained.

< Details on Application of PSO>

The optical system 101 includes lens information for the optical system to which BPM is to be applied. Current optical design programs include Zemax, CodeV, LightTools, ASAP, TracePro, etc., and are using "ray tracing" based on geometrical optics. "Ray tracing" involves refraction by media with different refractive indices and transmission occurring in a single medium, and can be calculated using geometric information of media boundaries and the optical properties of the media. Produced rays are interpreted using the modulation transfer function (MTF), the point spread function (PSF), etc., reflecting predetermined diffraction and physical optics calculation formulas.

In the present disclosure, the optical system 101 includes the same geometric information and optical properties of a lens as an imaging system intended to capture an actual image, and calculates an optical transfer function based on the depth of a subject.

- Image Simulation

The image simulation is performed by convolving a test target with a point spread function calculated by the optical system 101. "USAF 1951", "Ronchi Ruling", "Star", etc. which are designed to help evaluate and adjust the performance of the imaging system, may be used as test targets.

- Performance Evaluation

The performance evaluation is performed by an image quality assessment based on the depth of a subject. Referring to Table 1, an image quality assessment method may use a fullreference evaluation method that references an undistorted image and a no-reference method that does not reference the undistorted image.

[Table 1]

| Full reference |
| --- |
| Mean square error (MSE), peak signal to noise ratio (PSNR), structure similarity (SSIM), etc. |
| **No reference** |
| Blind/Referenceless Image Spatial Quality Evaluator (BRISQUE), Natural Image Quality Evaluator (NIQE), Perception based Image Quality Evaluator (PIQE), etc. |

$$y = \operatorname*{argmin}_{\bar{p}_t} \sum_{z=1}^{Z} f_0 - f(z, \bar{p}_t) + \lambda \sum_{z=1}^{Z-1} f(z+1, \bar{p}_t) - f(z, \bar{p}_t) \tag{2}$$

Equation (2) is an expression for the cost y of the present algorithm, and the present disclosure can derive a binary phase structure that minimizes the cost. $f$ denotes the image quality assessment result, $f_0$ denotes a target image quality, $\bar{p}_t$ denotes a binary phase structure matrix at t-th iteration, $\sum_{z=1}^{Z}()$. denotes a targeted depth extension interval, and $\lambda$ denotes a regularization coefficient.

- PSO Algorithm

In the present disclosure, a particle swarm optimization (PSO) algorithm has been proposed to modify the binary phase structure $\bar{p}(t)$ at every t-th iteration . The PSO algorithm is an optimization algorithm that searches for a component $\bar{p}$ $\operatorname*{argmin}_{\bar{p}}$ that minimizes the cost y calculated by Equation (2).

In the present disclosure, the cost y associated with the binary phase structure $\bar{p}$ is not a differentiable function, so a minimum cost search via differentiation such as gradient descent is not possible. PSO is a methodology of mathematical optimization, wherein multiple particles (agents) exchange information with each other and simultaneously combine stored information to find an optimal solution. The swarm-based optimization is advantageous in that agents performs optimization while exchanging information with each other, so even when one agent converges to the local optimum, the swarm may converge to the global optimum.

$$\vec{v}_{ij}(t+1) = w^\star \ \vec{v}_{ij}(t) + r_1 c_1 \left( a_{ij}(t) - x_{ij}(t) \right) + r_2 c_2 (g_j(t) - x_{ij}(t)) \tag{3}$$

$$\vec{x}_{ij}(t+1) = x_{ij}(t) + v_{ij}(t+1) \tag{4}$$

The PSO algorithm uses multiple agents to perform an optimization in one or more variable spaces, and Equations (3) and (4) represent the velocity vector and position vector of a j-th agent with respect to an i-th variable at (t+1)-th iteration, respectively. Here, $r_1$ and $r_2$ are random numbers between 0 and 1, $C_1$ and $C_2$ are cognitive and social coefficients respectively. For information exchange between agents, the agent lowest cost (agent best solution) is aij, and the swarm lowest cost (global best solution) is $g_j(t)$. In order for the PSO algorithm to modify the binary structure $\bar{p}_t$ design, the initial j-th agent may be represented by an initial binary structure and Equation (5).

$$\vec{x}_{ij}(t=0) = \bar{p}_j(t=0) = \{p_{0j}(t=0), p_{1j}(t=0), \dots, p_{ij}(t=0)\} \tag{5}$$

- PSO Algorithm Embodiment

In one example, one binary phase filter for i components may be represented by a matrix $\bar{p} = \{p_1, p_2, \dots, p_n\}$. N binary phase filters processed in parallel by the agent may be represented by a matrix $\bar{p}_1(t), \bar{p}_2(t), \dots, \bar{p}_N(t)$. Initial N binary phase filters may be represented by a matrix $\overline{p}_1(0), \overline{p}_2(0), ... , \overline{p}_N(0)$.

After t adjustments (iterations), a binary phase filter of the j-th agent may have solutions such as $\overline{p}_j(0), \overline{p}_j(1), \overline{p}_j(2), ... , \overline{p}_j(t)$, and a solution with the lowest cost among the solutions may be defined as an agent best solution, $a_{ij}$.

The swarm lowest cost (global best solution), $g_j(t)$, refers to the historically best solution that shows the best result value over a number of adjustments (iterations). Over t adjustments, the binary phase filter may have solutions such as the matrix $\overline{p}_1(0), \overline{p}_2(0), ... , \overline{p}_j(0); \overline{p}_1(1), \overline{p}_2(1), ... , \overline{p}_j(1); ...; \overline{p}_1(t), \overline{p}_2(t), ... , \overline{p}_j(t)$, and a solution with the lowest cost among the solutions may be defined as the swarm lowest cost (global best solution), .

< Continuous Phase Pattern Binarization >

In the present disclosure, the binary phase structure of the phase shift mask 110 may have a binarized continuous phase pattern, and the specific patterning method is as follows.

When there is a continuous phase pattern P($\rho$) that is a function of distance $\rho$ from the center, the binarized function $P_{bin}(\rho)$ thereof may be expressed as Equation (6).

$$P_{bin}(\rho) = \begin{cases} 1 & (\mathrm{Re}[\mathrm{P}(\rho)] \geq 0) \\ -1 & (\mathrm{Re}[\mathrm{P}(\rho)] < 0) \end{cases}, \qquad \text{(Equation 6)}$$

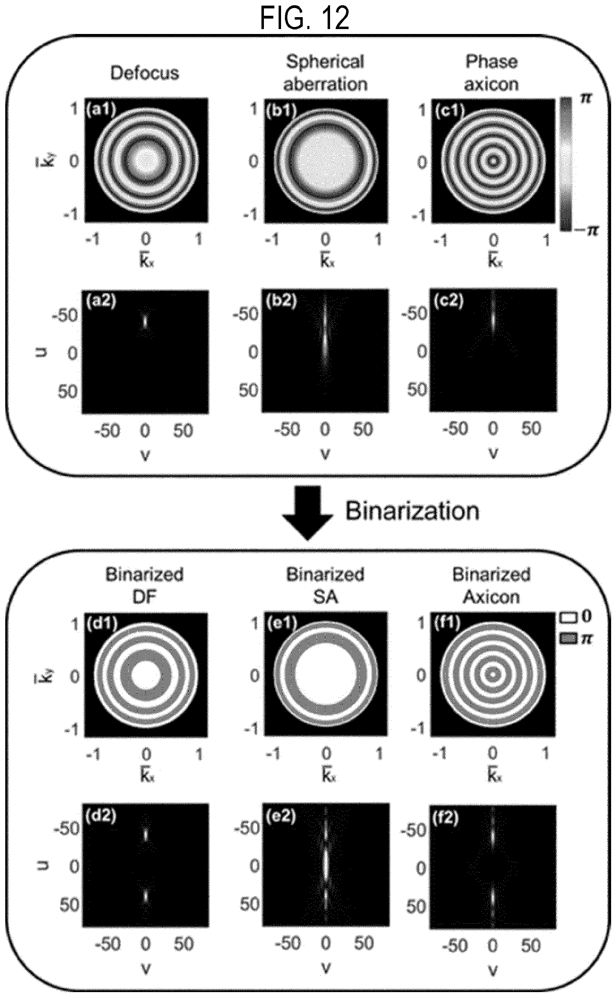

FIG. 12 illustrates various continuous phase patterns and the result of binarization of each pattern.

That is, in FIG. 12, (a1) is a continuous pattern represented by defocus aberration, is represented by $P_{DF} = \exp(-2\pi i \psi \rho^2)$, and is expressed as a quadratic function of $\rho$ with respect the defocus parameter $\psi$. Furthermore, in FIG. 12, (a2) is the focus pattern that appears when (a1) is placed in front of a lens, and each focus pattern figure is a focal plane where the vertical direction is the traveling direction of light and the point u=0 corresponds to the focal length. In this case, (a1) has the effect of shifting the focus in proportion to the value of $\psi$ and along the traveling direction of light in the focal plane. (b1) represents spherical aberration (SA), and is expressed as $P_{SA} = \exp(-2\pi i \gamma \rho^4)$. The spherical aberration, as shown in (b2), has the effect of elongating the focus along the traveling direction, and the degree of elongation increases with the value of $\gamma$.

In FIG. 12, (c1) is an example of a first-order function, and is expressed as $P_{AXI} = \exp(-2\pi i \alpha \rho)$. The function has the effect of shifting the focus in the focal plane, while simultaneously extending the length thereof, as shown in (c2). The amount of shift and the degree of extension increase proportionally to the value of $\alpha$. The lower part of FIG. 12 shows the result of binarizing each function in the upper part of FIG. 12 by using Equation (6). The focus of each binarized function is morphologically similar to the focus generated by the continuous pattern, but generate additional shapes that are symmetrical around the focal plane. This phenomenon may be used to consider polynomials of $\rho$ with different orders when generating continuous functions.

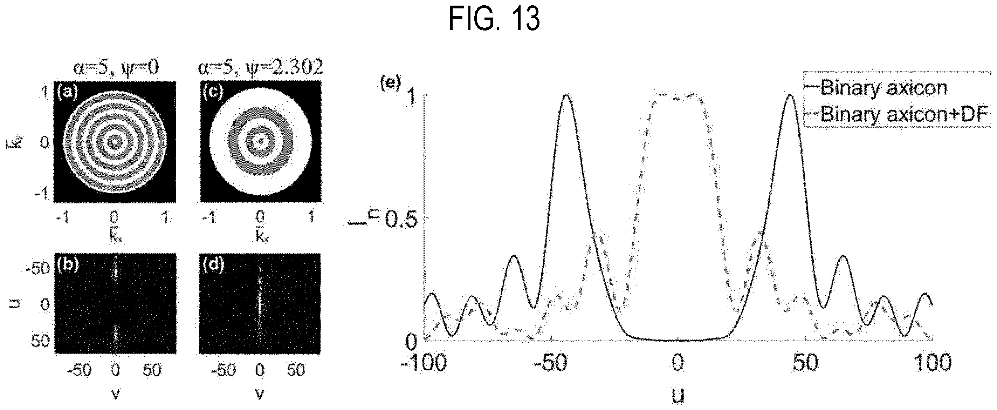

FIG. 13 illustrates the result of binarization of a continuous phase pattern consist of a quadratic expression in which a first-order term and a second-order term are combined.

In FIG. 13, (a) is the result of binarizing a continuous phase pattern ($P_{AXI} = \exp(-2\pi i \alpha \rho)$) consist only of a first-order expression, where the value of $\alpha$ is assumed to be 5. The focus formation result, as shown (b) in FIG. 13, forms two extended foci that are symmetrically spaced apart from each other with respect to the focal plan. In FIG. 13, (c) is the result of the binarization of a continuous phase pattern ($P_{AXI-DF} = \exp(-2\pi i (\alpha \rho + \psi \rho^2))$) expressed as a quadratic expression of $\rho$. The focus changed by this function, as shown in (d) in FIG. 13, demonstrates an extended shape compared to the original focus, where the two foci spaced apart each other are joined together.

In FIG. 13, (e) is a graph of intensity at v=0 in (b) and (d) in FIG. 13. It can be seen that the two foci spaced apart from each other have joined together as the value of $\psi$ increases, thereby forming a single extended focus. FIG. 13 considers only the case where only first-order and second-order terms are used to extend the focus. However, foci with various shapes may be formed by using terms of various orders, and multiple designs may be found by adjusting the coefficient value of each term.

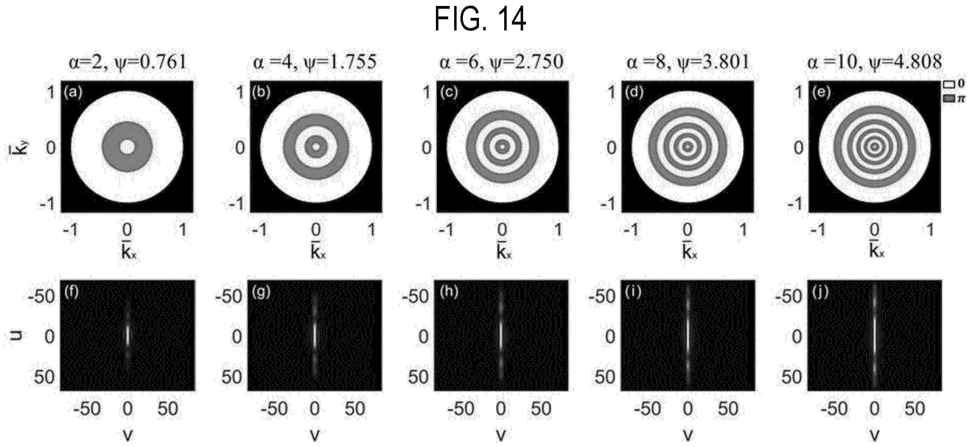

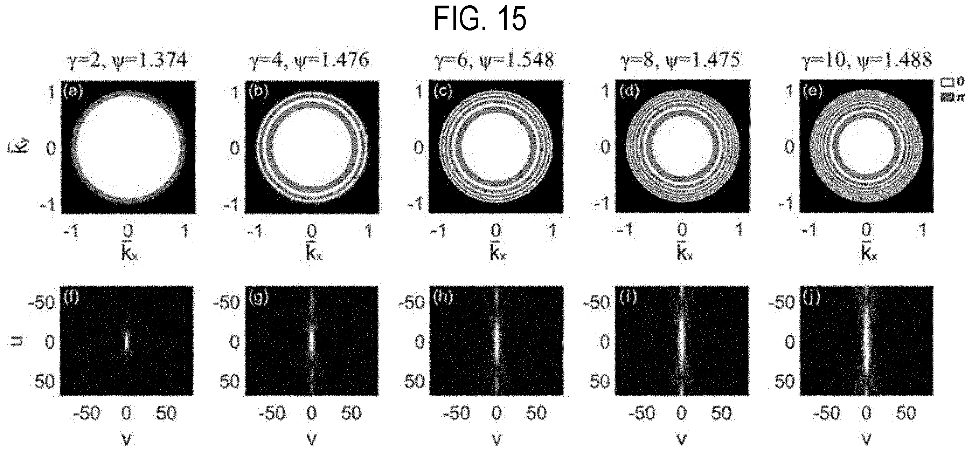

FIG. 14 illustrates multiple binary phase structures obtained by generating a continuous function through the adjustment of the coefficients of first-order and second-order terms ($P_{AXI-DF} = \exp(-2\pi i (\alpha \rho + \psi \rho^2))$) and binarizing the generated function, and focal results thereof. FIG. 15 illustrates multiple binary phase structures generated using second-order and fourth-order terms ($P_{SA-DF} = \exp(-2\pi i (\psi \rho^2 + \gamma \rho^4))$).

As shown in FIGS. 14 and 15, multiple binary phase structures may be found by adjusting the coefficient value of each term and predicting the focus generation pattern. In the present embodiment, only the first-order, second-order, and fourth-order terms were used. However, various binary phase structures may also be found when binarization is performed on polynomials that include terms with other orders.

The present disclosure, configured as described above, is advantageous in that it is possible to extend the depth of field (DOF) of an optical system by using a binary phase structure. Furthermore, the present disclosure is advantageous in that the optimal binary phase structure can be generated based on particle swarm optimization (PSO), thereby significantly reducing parameters used for the design of a binary phase mask and optimizing the performance thereof.

Although the detailed description of the present disclosure has been made of specific embodiments, it will be understood that various changes can be made without departing from the scope of the present disclosure. Therefore, the scope of the present disclosure is not limited to the described embodiments but should be defined by the following claims and equivalents thereof.

**Claims**

1. A system for extending a depth of field of an optical system, the system comprising:

   a binary phase mask disposed between first and second lenses of the optical system; and
   a controller configured to control a binary phase structure formed in the phase shift mask.

2. The system of Claim 1, wherein the controller is configured to evaluate the binary phase structure of the phase shift mask by using light output from the second lens according to the binary phase structure, and then to use the binary phase structure as is or change the binary phase structure, based on the evaluation result.

3. The system of Claim 1, wherein the phase shift mask comprises first and second regions configured to perform different phase shift actions on light.

4. The system of Claim 3, wherein the first region is configured to delay incident light by a first phase, and the second region is configured to delay incident light by a second phase.

5. The system of Claim 3, wherein the first region is configured to delay incident light by a phase of 0°, and the second region is configured to delay incident light by a phase of 180°.

6. The system of Claim 5, wherein the first and second regions are provided in plural and are formed alternately.

7. The system of Claim 6, wherein the second region is placed in a center of the first and second regions provided in plural.

8. The system of Claim 1, wherein the binary phase mask is implemented as a spatial light modulator or a grating light valve.

9. The system of Claim 2, wherein the controller is configured to change the binary phase structure to an optimal binary phase structure by using particle swarm optimization.

10. A method for extending a depth of field of an optical system, the method comprising:

    disposing a binary phase mask between first and second lenses of the optical system; and
    applying an optimal binary phase structure while controlling a binary phase structure formed on the phase shift mask.

11. The method of Claim 10, wherein the applying of the optimal binary phase structure comprises evaluating the binary phase structure of the phase shift mask by using light output from the second lens according to the binary phase structure, and then using the binary phase structure as is or changing the binary phase structure, based on the evaluation result.

12. The method of Claim 10, wherein the applying of the optimal binary phase structure comprises applying the optimal binary phase structure by using particle swarm optimization.

# FIG. 1

```
┌─────────────────────────┐
│   Phase shift mask      │──110
└─────────────────────────┘
            ▲
            │ Controlling
            │ phase structure
┌─────────────────────────┐
│   Electronic device     │──120
└─────────────────────────┘
```

_100_

# FIG. 2

```
                                    Light        101
                                     ┊            ╲
                          ┌ ─ ─ ─ ─ ─┊─ ─ ─ ─ ─ ─ ─ ─┐
                          ┊          ▼                ┊
                          ┊   ┌──────────────┐        ┊
                          ┊   │  First lens  │──102   ┊
                          ┊   └──────────────┘        ┊
        Controlling       ┊          ┊                ┊
         phase            ┊          ▼                ┊
        structure   ┌──────────┐ ┌──────────────┐     ┊
┌──────────────┐    │          ┊ │Phase shift   │──110┊
│  Electronic  │───▶┊          │ │   mask       │     ┊
120─│  device   │    │          ┊ └──────────────┘     ┊
└──────────────┘    └──────────┘        ┊             ┊
                          ┊             ▼             ┊
                          ┊   ┌──────────────┐        ┊
                          ┊   │  Second lens │──103   ┊
                          ┊   └──────────────┘        ┊
                          └ ─ ─ ─ ─ ─ ─ ─ ─ ─ ─ ─ ─ ─ ┘
```

# FIG. 3

(a)

: 112
: 111
: 113

110

(b)

: 112
: 111
: 113

110

# FIG. 4

# FIG. 5

# FIG. 6

# FIG. 7

```
        ┌──────────────┐
        │    Start      │
        └──────────────┘
               │
               ▼                        S201
        ┌──────────────────────────┐
   ┌───▶│ Design of binary phase   │
   │    │       structure          │
   │    └──────────────────────────┘
   │            │
   │            ▼                      S202
   │    ┌──────────────────────────┐
  No    │       Evaluating          │
   │    └──────────────────────────┘
   │            │
   │            ▼                      S203
   │         ╱────────────────────╲
   └────────  Is condition satisfied?
             ╲────────────────────╱
                     │
                    Yes             S204
                     ▼
        ┌──────────────────────────┐
        │  Applying phase shift mask │
        │   of corresponding binary  │
        │      phase structure       │
        └──────────────────────────┘
                     │
                     ▼
        ┌──────────────┐
        │     End       │
        └──────────────┘
```

# FIG. 8

Binary phase structure

- ■ 111
- □ 112

Setting variables
$$\overline{p} = \{p_1, p_2, \dots p_n\}$$

Initial design $\overline{p_0}$ → System function → Simulating image → Evaluating performance $\overline{y}(\overline{p_t})$

Modified design $\overline{p_{t+1}}$ ← PSO Performing algorithm ← NO — IF (condition)

YES → Outputting $\overline{p}_{Best}$

Particle swarm optimization

EP 4 492 123 A1

# FIG. 9

Binary phase filter
■ 111
□ 112

BIN

Continuous phase filter

$\pi$

$-\pi$

**Binary phase structure design method**

Setting variables
$\overline{p} = \{p_1, p_2, \dots p_n\}$

$p_4$
$p_3$
$p_2$
$p_1$

Initial design
$\overline{p_0}$

System function

Simulating image

Evaluating performance

$\overline{y}(\overline{p_t})$

Modified design
$\overline{p}_{t+1}$

PSO

Performing algorithm

NO

IF
(conditio
n)

YES

Outputting
$\overline{p}_{Best}$

**Particle swarm optimization**

EP 4 492 123 A1

# FIG. 10

**Object**
$I(v, w)$

$\otimes$
convolution

**Image**
$I^*(v, w)$

**Point spread function(PSF)**
$h(v, w)$

# FIG. 11

# FIG. 12

FIG. 13

## FIG. 14

$\alpha=2, \psi=0.761$     $\alpha=4, \psi=1.755$     $\alpha=6, \psi=2.750$     $\alpha=8, \psi=3.801$     $\alpha=10, \psi=4.808$

FIG. 15

<table>
<tr><td colspan="2" align="center"><strong>INTERNATIONAL SEARCH REPORT</strong></td><td>International application No.<br><strong>PCT/KR2023/003320</strong></td></tr>
</table>

**A. CLASSIFICATION OF SUBJECT MATTER**

**G02B 26/06**(2006.01)i; **G02B 5/20**(2006.01)i; **G02B 5/28**(2006.01)i; **G02B 5/30**(2006.01)i

According to International Patent Classification (IPC) or to both national classification and IPC

**B. FIELDS SEARCHED**

Minimum documentation searched (classification system followed by classification symbols)

G02B 26/06(2006.01); A61B 1/04(2006.01); G02B 27/00(2006.01); G02B 27/46(2006.01); G02B 5/18(2006.01); H01L 27/146(2006.01); H04N 5/225(2006.01); H04N 5/228(2006.01); H04N 5/232(2006.01); H04N 9/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 피사계 심도(depth of field), 위상(phase), 공간 광 변조기(spatial light modulator), 격자 광 밸브(grating light valve), 입자 군집 최적화(particle swarm optimization)

**C. DOCUMENTS CONSIDERED TO BE RELEVANT**

| Category* | Citation of document, with indication, where appropriate, of the relevant passages | Relevant to claim No. |
|---|---|---|
| Y | JP 2000-275582 A (OLYMPUS OPTICAL CO., LTD.) 06 October 2000 (2000-10-06)<br>See paragraphs [0024]-[0038], claims 1-3 and figure 1. | 1-12 |
| Y | JP 2017-028684 A (COMMISSARIAT A L`ENERGIE ATOMIQUE ET AUX ENERGIES ALTERNATIVES et al.) 02 February 2017 (2017-02-02)<br>See paragraphs [0080]-[0093], claim 5 and figures 1 and 6. | 1-12 |
| Y | KR 10-2021-0049670 A (SAMSUNG ELECTRONICS CO., LTD.) 06 May 2021 (2021-05-06)<br>See paragraph [0180] and figure 20. | 9,12 |
| A | US 2010-0097487 A1 (MAROM, Emanuel et al.) 22 April 2010 (2010-04-22)<br>See paragraphs [0050]-[0058], claims 7-10 and figures 1 and 3. | 1-12 |
| A | CN 102062887 A (SHANGHAI INSTITUTE OF OPTICS AND FINE MECHANICS, CHINESE ACADEMY OF SCIENCES) 18 May 2011 (2011-05-18)<br>See paragraphs [0004]-[0008] and figures 1 and 3. | 1-12 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 June 2023** | **19 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/003320**

| Patent document cited in search report | | | Publication date (day/month/year) | Patent family member(s) | | | Publication date (day/month/year) |
|---|---|---|---|---|---|---|---|
| JP | 2000-275582 | A | 06 October 2000 | None | | | |
| JP | 2017-028684 | A | 02 February 2017 | EP | 3109687 | A1 | 28 December 2016 |
| | | | | EP | 3109687 | B1 | 09 September 2020 |
| | | | | JP | 6823948 | B2 | 03 February 2021 |
| | | | | US | 10095027 | B2 | 09 October 2018 |
| | | | | US | 2016-00377861 | A1 | 29 December 2016 |
| KR | 10-2021-0049670 | A | 06 May 2021 | US | 11640645 | B2 | 02 May 2023 |
| | | | | US | 2021-0125301 | A1 | 29 April 2021 |
| US | 2010-0097487 | A1 | 22 April 2010 | US | 8576323 | B2 | 05 November 2013 |
| CN | 102062887 | A | 18 May 2011 | CN | 102062887 | B | 13 June 2012 |

Form PCT/ISA/210 (patent family annex) (July 2022)